# EUROPEAN PATENT SPECIFICATION

(11) **EP 0 751 845 B1**
(45) Date of publication and mention of the grant of the patent: **19.05.1999**
(21) Application number: 95914053.4
(22) Date of filing: 15.03.1995
(51) Int. Cl.: B23B 27/16

(54) **CUTTING TOOL ASSEMBLY AND CUTTING TOOL BIT**
SCHNEIDWERKZEUGZUSAMMENBAU UND SCHNEIDEINSATZ
ENSEMBLE OUTIL DE COUPE ET OUTIL RAPPORTE

(30) Priority: 31.03.1994 DE 4411400
(43) Date of publication of application: 08.01.1997
(73) Proprietor: KENNAMETAL INC., Latrobe, PA 15650 (US)
(72) Inventor: ZITZLAFF, Wolfgang, D-61184 Karben (DE); CERNY, Max, D-86173 Augsburg (DE)
(74) Representative: Degwert, Hartmut, Dipl.-Phys.
(86) International application number: US9503258
(87) International publication number: WO9526846

(56) References cited:
- DE-A- 4 320 409
- FR-A- 1 524 276
- GB-A- 271 208
- US-A- 3 431 801

## Description

### BACKGROUND OF THE INVENTION

The present invention relates to a cutting tool assembly and to a cutting tool bit for use therein.

Cutting tools suitable for precision cutting of grooves or profiling operations have a cutting bit with a cutting head projecting from a tool holder. In U.S. Patent No. 1,542,007 a cutting tool with a conical bit accommodated in a socket of the tool holder is disclosed. The socket is formed by a tapered bore. The conical cutting bit has a circumferential groove, and a clamping screw engages in the groove to retain the cutting bit in its socket. The cutting bit has a circular cutting edge at the intersection of its top face and its conical side face. When the cutting edge presented to the workpiece is worn the tool bit can be revolved about its longitudinal axis to present a new cutting edge. cutting tool assembly with a conical cutting bit is disclosed in U.S. Patent No. 3,871,092, which defines the precharacterizing part of claim 1 and claim 11. The tool bit has a bottom formed by two flat converging seating surfaces. A socket of corresponding shape is provided in the tool holder. The cutting bit is fastened to the tool holder by a top clamp engaging the planar top face of the bit.

### SUMMARY OF THE INVENTION

The present invention provides a cutting tool assembly wherein the cutting bit has a cutting head freely projecting from the tool holder so that relatively deep cuts are possible without obstruction by the clamping arrangement. In accordance with the invention, the cutting tool assembly comprises a tool holder which defines an elongated seating surface with a socket on one longitudinal end, a threaded bore on the other end and a further threaded bore in an intermediate zone. The cutting tool bit has a cutting head portion and a shank adapted to be received in the socket of the tool holder. An elongated clamping member is provided which has an end portion provided with a tool engagement face. The other end portion of the clamping member is provided with an abutment face, and a preferably elongated through-hole is provided in an intermediate zone of the clamping member.

A fastening screw is adapted to extend through the hole in the clamping member and to be engaged in the corresponding threaded bore of the seating surface. An adjustment screw having a tapered head is adapted to be engaged in the threaded bore on the second longitudinal end of the seating surface. The tool bit has a side face with a circumferential groove therein. The corresponding end portion of the clamping member is adapted to engage into this groove, and the abutment face on the other end portion of the clamping member is adapted to bear on the tapered head of the adjustment screw. When the fastening screw is tightened, the clamping member is free to move both in a longitudinal direction and in the direction of the fastening screw for self-alignment between the tapered head surface of the adjustment screw and the surface of the groove in the tool bit. When the adjustment screw is rotated in a sense moving its tapered head away from the seating surface of the tool holder, the clamp is urged in a longitudinal direction towards the tool bit, thereby establishing a firm contact between the engagement face on the end portion of the clamping member and the corresponding, preferably conical surface of the groove in the tool bit.

Preferably, the clamping member has a convex projection on its side facing the seating surface of the tool holder between its end portion provided with the tool engagement face and its through hole. The convex projection bears on the seating surface of the tool holder and permits a rocking movement of the clamping member. This rocking movement of the clamping member contributes to an optimum self-alignment of the contacting faces between the clamping member on the one hand and the groove of the tool bit and the tapered head of the adjustment screw on the other hand.

In the preferred embodiment, the fastening screw has a head portion and a peripheral groove spaced from the head portion and a clip is engaged in the groove to retain the fastening screw on the clamping member. When the fastening screw is released, the bit abuts the adjacent face of the clamping member, which is then lifted away from the seating surface of the tool holder. Simultaneously, the clamping member is disengaged from the groove of the tool bit, which is thus released and can be rotated or indexed in the socket of the tool holder or can be replaced in case of need.

In a preferred embodiment, the cutting tool bit has a cutting head portion with a truncated cone-shaped side face which is defined by a top face and a peripheral groove. The tool bit has a shank and a radial flange between the groove and the shank. The radial flange forms a radial seating surface, and the groove is partially defined on its side adjacent the flange by a truncated cone-shaped side face. A circular cutting edge is formed at the intersection of the top face and the side face.

Further objects and features of the invention will become apparent from the following description and the accompanying drawings which are illustrative of the invention.

### BRIEF DESCRIPTION OF THE DRAWINGS

Fig. 1 is a perspective view of a cutting tool assembly with a conical tool bit;

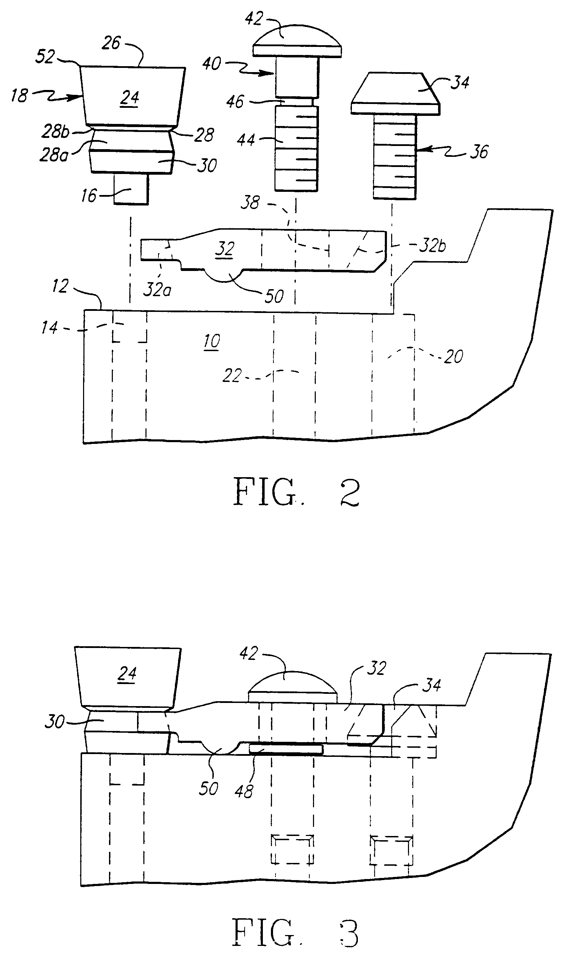

Fig. 2 is an elevational explosive view of the assembly shown in Figure 1;
Fig. 3 is an elevational view of the assembly;
Fig. 4 is a plan view of a clamping member;
Fig. 5 is a sectional view of the clamping member along line V-V in Fig. 4; and
Fig. 6 is a perspective partial view of an alternative embodiment of a tool bit and seating socket on the tool holder.

### DETAILED DESCRIPTION OF THE INVENTION

The cutting tool assembly of the invention comprises an elongated tool holder 10 with a recessed top forming an elongated planar seating surface 12. On its forward or front end the tool holder 10 is provided with a socket 14 for mating accommodation of the shank portion 16 of a tool bit 18. A threaded bore 20 is provided in the rear end portion of the seating surface 12. A further threaded bore 22 is formed in the seating surface 12 between the socket 14 and the threaded bore 20, but closer to the latter. The socket 14 and the threaded bores 20, 22 are aligned along the center line of the seating surface 12.

The tool bit 18 has a conical cutting head portion 24 which, more precisely, is of truncated cone-shape with the larger diameter on the side of its flat top face 26. The cutting head portion 24 is adjacent to a circumferential groove 28, and a radial flange 30 is provided adjacent the groove 28 between the latter and the shank 16. The groove 28 is defined by two intersecting and converging, conical, or truncated cone-shaped surface portions 28a and 28b.

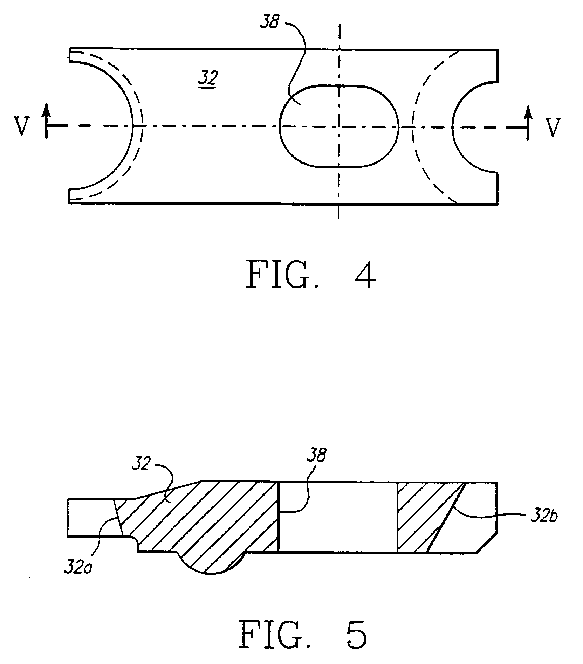

An elongated bar-shaped clamping member 32 has a forward end of an arcuate concave shape when seen in top view (of. Fig. 4) and defines an inclined tool engagement face 32a corresponding in shape to the conical surface portion 28a of the groove 28. On its opposite rear end portion the clamping member 32 is formed with an arcuate concave surface portion 32b which is inclined in a direction opposite to that in which the tool engagement face 32a is inclined. The arcuate surface portion 32b is of a partially conical shape corresponding to the conical shape of a tapered head 34 of an adjustment screw 36. The threaded shank portion of the adjustment screw 36 is adapted to be engaged in the threaded bore 20.

The elongated clamping member 32 has an elongated through-hole 38 and a fastening screw 40 is provided to extend through the hole 38 and to be engaged in the threaded bore 22. The fastening screw 40 has a head portion 42, a shank 44 and a radial circumferential groove 46 spaced from the head portion 42 at a distance somewhat greater than the thickness of the elongated, bar-shaped clamping member 32. A clip 48 can be engaged in the groove 46, so that in cooperation with the head portion 42, the fastening screw 40 is retained on the clamping member 32.

On its side facing the seating surface 12 the clamping member 32 is provided with a convex projection 50 located between the forward end portion and the through hole 38 of the clamping member. The convex projection 50 is adapted to engage the planar seating surface 12 to allow a rocking movement of the clamping member 32 about its line of contact on the seating surface 12. Nevertheless, the clamping member 32 is free to slide on the seating surface 12 in the longitudinal direction thereof.

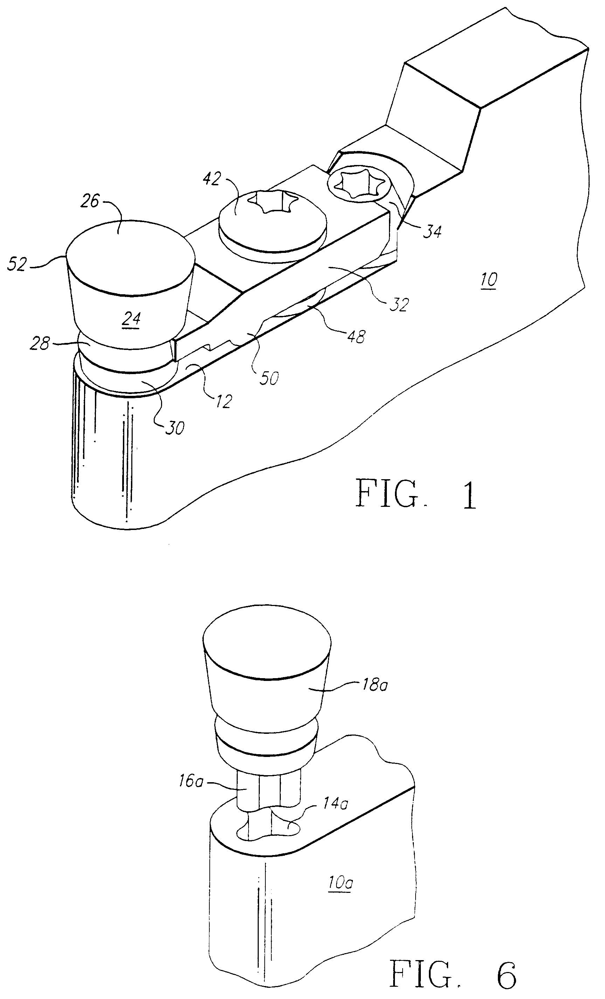

In the mounted state, as shown in Figs. 1 and 3, the conical head portion 34 of the adjustment screw 36 projects above the seating surface 12 and the arcuate surface portion 32b forms an abutment face closely engaged on the conical surface portion of tapered head 34. On the opposite end of the clamping member 32, the arcuate tool engagement face 32a comes into close engagement with the conical surface portion 28a of the groove 28. The fastening screw 40 extends through the elongated hole 38 and is engaged in the threaded bore 22. When the fastening screw 40 is tightened, the convex projection 50 of the clamping member 32 is urged against the seating surface 12, and the arcuate surface portions 32a and 32b are wedged against the conical surface portion 28a of the groove 28 and the conical surface of the tapered head 34, respectively. By more or less raising the adjustment screw 36 above the seating surface 12, the wedging action between the arcuate surface portion 32b of the tool holder 32 and the conical surface portion on the tapered head 34 causes a longitudinal movement of the clamping member 32 in a direction towards the tool bit 18. Simultaneously, the tool engagement face 32a on the front end of the clamping member 32 is more firmly engaged with the conical surface portion 28a of the groove 28, so that the tool bit 18 is clamped against the seating surface 12, with the planar seating face on the lower side of the radial flange 30 contacting the corresponding portion of the seating portion 12 surrounding the socket 14. It is readily understood that the clamping mechanism of this invention permits self-alignment of the clamping member 32 with a uniform distribution of clamping forces. The clamping mechanism permits the cutting head portion 24 to project freely above the seating surface 12, thus permitting rather deep cuts of grooves or profiles.

When the circular cutting edge 52 formed at the intersection of the top face 26 and the conical side face of the head portion 24 is worn in its zone presented to a workpiece, the fastening screw 40 is released, and the tool bit 18 is rotated to a sufficient extent to present a new cutting edge portion to the workpiece. Thereafter, the fastening screw is tightened again. When the fastening screw 40 is released, the clip 48 engages beneath the clamping member 32, so that the tool engagement face 32a is positively lifted and withdrawn from the conical surface portion 28a of the groove 28.

The circumferential groove 28 also serves the purpose of forming a weakening in the structure of the tool bit 18. Should a collision occur unintentionally between the workpiece and the tool bit, the head piece of the tool bit is ruptured along the groove 28 and falls clear of the workpiece, thus preventing the tool bit from damaging the workpiece.

In the embodiment shown in Figure 6, the tool bit 18a has a shank 16a formed with splines corresponding in shape to concave portions of the socket 14a in the tool holder 10a. By mating engagement of the splines on the shank 16a in the corresponding concave portions of the socket 14a, the tool bit 18a is prevented from rotation in the socket 14a. In this embodiment, the tool bit 18a can be indexed by fixed amounts of e.g. 45° when a new cutting edge portion is required.

## Claims

1. A cutting tool assembly having a tool holder (10) defining an elongated seating surface (12) with a socket (14) on a first longitudinal end, an elongated clamping member (32) having a first end portion provided with a tool engagement face (32a), a second end portion and a through-hole (38), a fastening screw (40) being adapted to extend through said hole (38) in said clamping member (32) and to be engaged in a threaded bore (22) in said tool holder (10), a tool bit (18) having a cutting head portion (26) and a shank (16) for being fixed to said tool holder (10), said cutting tool assembly being characterized by:
a) a first threaded bore (20) on said second longitudinal end of said tool holder (10);
b) said threaded bore (22) for being engaged by said fastening screw (40) being arranged between said first and second longitudinal ends to define a second threaded bore;
c) said clamping member (32) being provided with an abutment face (32b) on said second end portion, said through-hole (38) being located between said first and second end portions;
d) an adjustment screw (36) having a tapered head (34) and adapted to be engaged in said first threaded bore (20);
e) said shank (16) of said tool bit (18) being adapted to be received in said socket (14) on said tool holder (10); and
f) said tool bit (18) having a side face with a groove (28), said first end portion of said clamping member (32) being adapted to engage into said groove (28) and said abutment face (32b) on the second end portion of said clamping member (32) being adapted to bear on said tapered head (34) of said adjustment screw (36).

2. The assembly of claim 1, wherein said clamping member (32) has a convex projection (50) on its side facing said seating surface (12) between said first end portion and said second threaded bore (22).

3. The assembly of claim 1, wherein said abutment face (32b) on the second end portion of said clamping member (32) is shaped to correspond to the shape of said tapered head (34) of the adjustment screw (36).

4. The assembly of claim 1, wherein said groove (28) in the side face of said tool bit (18) is partially defined by a truncated cone-shaped surface (28a) and said tool engagement face (32a) on the second end portion of said clamping member (32) is shaped to correspond to said truncated cone-shaped surface (28a).

5. The assembly of claim 1, wherein said abutment face (32b) on the second end portion of said clamping member (32) is shaped to correspond to the shape of said tapered head (34) of the adjustment screw (36), said groove (28) in the side face of said tool bit (18) is partially defined by a truncated cone-shaped surface (28a), said tool engagement face (32a) on the second end portion of said clamping member (32) is shaped to correspond to said truncated cone-shaped surface (28a) and said abutment (32b) and tool engagement faces (32a) are inclined in opposite directions.

6. The assembly of claim 1, wherein said tool bit (18) has a radial seating flange (30) between said groove (28) and said shank (16).

7. The assembly of claim 1, wherein said fastening screw (40) has a head portion (42), a circumferential groove (46) spaced from said head portion (42), and a clip (48) being engaged in said groove (46) to retain said fastening screw (40) on said clamping member (32).

8. The assembly of claim 1, wherein said cutting head portion (24) has a truncated cone-shaped side face with a smaller diameter on its side adjacent said groove (28) and a larger diameter on its top face (26), a circular cutting edge (52) being formed at the intersection of said top face (26) and said side face.

9. The assembly of claim 1, wherein said through-hole (38) in said clamping member (32) is elongated.

10. The assembly of claim 1, wherein said socket (14) and said tool bit shank (16) are provided with complementary splines to prevent rotation of said tool bit (18) on said tool holder (10).

## Patentansprüche

1. Schneidwerkzeugaufbau mit einem Werkzeughalter (10), der eine langgestreckte Sitzfläche (12) aufweist, die an einem ersten Längsende eine Einstecköffnung (14) hat, einem langgestreckten Klemmelement (32), das einen mit einer Werkzeugangriffsfläche (32a) versehenen ersten Endabschnitt, einen zweiten Endabschnitt und ein Durchgangsloch (38) aufweist, wobei eine Befestigungsschraube (40) sich durch das Loch (38) im Klemmelement (32) erstrecken kann und in eine Gewindebohrung (22) in dem Werkzeughalter (10) einschraubbar ist, einem Werkzeugeinsatz (18) mit einem Schneidkopfabschnitt (26) und einem Schaft (16), der an dem Werkzeughalter (10) angebracht wird, dadurch gekennzeichnet, daß
a) an dem zweiten Längsende des Werkzeughalters (10) eine erste Gewindebohrung (20) vorgesehen ist;
b) die Gewindebohrung (22), in die die Befestigungsschraube (40) einschraubbar ist, zwischen dem ersten und dem zweiten Längsende angeordnet ist und eine zweite Gewindebohrung bildet;
c) das Klemmelement (32) mit einer Anlagefläche (32b) an dem zweiten Endabschnitt versehen ist, wobei sich das Durchgangsloch (38) zwischen dem ersten und dem zweiten Endabschnitt befindet;
d) eine Einstellschraube (36) mit einem kegeligen Kopf (34) vorgesehen ist, die in die erste Gewindebohrung (20) einschraubbar ist;
e) der Schaft (16) des Werkzeugeinsatzes (18) in die Einstecköffnung (14) an dem Werkzeughalter (10) einsetzbar ist; und
f) der Werkzeugeinsatz (18) eine Seitenfläche mit einer Nut (28) aufweist, wobei der erste Endabschnitt des Klemmelements (32) in die Nut (28) eingreifen kann und die Anlagefläche (32b) am zweiten Endabschnitt des Klemmelements (32) an dem kegeligen Kopf (34) der Einstellschraube (36) abstützbar ist.

2. Schneidwerkzeugaufbau nach Anspruch 1, dadurch gekennzeichnet, daß das Klemmelement (32) auf seiner der Sitzfläche (12) zugewandten Seite zwischen dem ersten Endabschnitt und der zweiten Gewindebohrung (22) einen konvexen Vorsprung (50) aufweist.

3. Schneidwerkzeugaufbau nach Anspruch 1, dadurch gekennzeichnet, daß die Anlagefläche (32b) an dem zweiten Endabschnitt des Klemmelements (32) mit einer dem kegeligen Kopf (34) der Einstellschraube (36) entsprechenden Gestalt ausgebildet ist.

4. Schneidwerkzeugaufbau nach Anspruch 1, dadurch gekennzeichnet, daß die Nut (28) in der Seitenfläche des Werkzeugeinsatzes (18) teilweise durch eine kegelstumpfförmige Fläche (28a) begrenzt ist und daß die Werkzeugangriffsfläche (32a) an dem zweiten Endabschnitt des Klemmelements (32) mit einer der kegelstumpfförmigen Fläche (28a) entsprechenden Gestalt ausgebildet ist.

5. Schneidwerkzeugaufbau nach Anspruch 1, dadurch gekennzeichnet, daß die Anlagefläche (32b) an dem zweiten Endabschnitt des Klemmelements (32) mit einer dem kegeligen Kopf (34) der Einstellschraube (36) entsprechenden Gestalt ausgebildet ist, daß die Nut (28) in der Seitenfläche des Werkzeugeinsatzes (18) teilweise durch eine kegelstumpfförmige Fläche (28a) begrenzt ist, daß die Werkzeugangriffsfläche (32a) an dem zweiten Endabschnitt des Klemmelements (32) mit einer der kegelstumpfförmigen Fläche (28a) entsprechenden Gestalt ausgebildet ist und daß die Anlagefläche (32b) und die Werkzeugangriffsfläche (32a) in zueinander entgegengesetzten Richtungen geneigt sind.

6. Schneidwerkzeugaufbau nach Anspruch 1, dadurch gekennzeichnet, daß der Werkzeugeinsatz (18) zwischen der Nut (28) und dem Schaft (16) einen radialen Sitzflansch (30) aufweist.

7. Schneidwerkzeugaufbau nach Anspruch 1, dadurch gekennzeichnet, daß die Befestigungsschraube (40) einen Kopfabschnitt (42) und eine von dem Kopfabschnitt (42) beabstandete Umfangsnut (46) aufweist und daß eine Klammer (48) in die Nut (46) eingreift, um die Befestigungsschraube (40) an dem Klemmelement (32) zu halten.

8. Schneidwerkzeugaufbau nach Anspruch 1, dadurch gekennzeichnet, daß der Schneidkopfabschnitt (24) eine kegelstumpfförmige Seitenfläche mit einem an ihrer an die Nut (28) angrenzenden Seite geringeren Durchmesser und einem an ihrer Oberseite (26) größeren Durchmesser aufweist, wobei am Schnitt der Oberseite (26) mit der Seitenfläche eine kreisförmige Schneidkante (52) gebildet ist.

9. Schneidwerkzeugaufbau nach Anspruch 1, dadurch gekennzeichnet, daß das Durchgangsloch (38) in dem Klemmelement (32) länglich ist.

10. Schneidwerkzeugaufbau nach Anspruch 1, dadurch gekennzeichnet, daß die Einstecköffnung (14) und der Werkzeugeinsatzschaft (16) mit einem zueinander komplementären Nutenprofil versehen sind, das eine Drehung des Werkzeugeinsatzes (18) auf dem Werkzeughalter (10) verhindert.

## Revendications

1. Ensemble d'outil de coupe comprenant:
un porte outil (10) définissant une surface de portage allongée (12), avec une cavité (14) à une première extrémité longitudinale, un élément de fixation allongé (32), qui présente une première partie extrémale munie d'une surface (32a) de contact de l'outil, une deuxième partie extrémale et un trou traversant (38), une vis de fixation (40) agencée pour s étendre dans ledit trou (38) dudit élément de fixation (32) et se visser dans ledit trou taraudé (22) dans le porte-outil (10), un foret (18), qui présente une partie de tête de coupe (26) et une tige (16) agencée pour être fixée au porte-outil (10), ledit ensemble d'outil de coupe étant caractérisé par:
a) un premier trou taraudé (20) à la deuxième extrémité longitudinale du porte-outil (10);
b) ledit trou taraudé (22), pour recevoir la vis de fixation (40), étant agencé entre lesdites première et deuxième parties extrémales, pour définir un second trou taraudé;
c) l'élément de fixation (32) comportant une surface d'appui (32b) sur la deuxième partie extrémale, le trou traversant (38) étant situé entre lesdites première et deuxième parties extrémales ;
d) une vis de réglage (36), qui présente une tête conique (34), et qui peut se visser dans ledit premier trou taraudé (20) ;
e) la tige (16) du foret (18) étant agencée pour être reçue dans la cavité (14) sur le porte-outil (10); et
f) ledit foret (18) présentant une surface latérale avec une rainure (28), ladite première partie extrémale dudit élément de fixation (32) étant agencée pour pénétrer dans ladite rainure (28) et ladite surface d'appui (32b) de la deuxième partie extrémale dudit élément de fixation (32) étant agencée pour reposer sur ladite tête conique (34) de ladite vis de réglage (36).

2. Ensemble selon la revendication 1, dans lequel ledit élément de fixation (32) présente une protubérance convexe (50) sur son côté tourné vers ladite surface de portage (12), entre ladite première partie extrémale et ledit deuxième trou taraudé (22).

3. Ensemble selon la revendication 1, dans lequel ladite surface d'appui (32b) de la deuxième partie extrémale dudit élément de fixation (32) présente une forme qui correspond à celle de ladite tête conique (34) de la vis de réglage (36).

4. Ensemble selon la revendication 1, dans lequel ladite rainure (28) dans la surface latérale dudit foret (18) est partiellement définie par une surface tronconique (28a), et ladite surface de contact de l'outil (32a) de la deuxième partie extrémale dudit élément de fixation (32) présente une forme qui correspond à ladite surface tronconique (28a).

5. Ensemble selon la revendication 1, dans lequel ladite surface d'appui (32b) de la deuxième partie extrémale dudit élément de fixation (32) présente une forme qui correspond à celle de ladite tête conique (34) de la vis de réglage (36), ladite rainure (28) dans la surface latérale dudit foret (18) est partiellement définie par une surface tronconique (28a), ladite surface de contact de l'outil (32a) de la deuxième partie extrémale dudit élément de fixation (32) présente une forme qui correspond à celle de la surface tronconique (28a), et lesdites surfaces d'appui (32b) et de contact de l'outil (32a) sont inclinées dans des sens contraires.

6. Ensemble selon la revendication 1, dans lequel ledit foret (18) présente un rebord d'appui radial (30,) entre ladite rainure (28) et ladite tige (16).

7. Ensemble selon la revendication 1, dans lequel ladite vis de fixation (40) présente une partie de tête (42), une rainure circonférentielle (46) espacée de ladite partie de tête (42), et un collier (48) qui pénètre dans ladite rainure (46) pour retenir ladite vis de fixation (40) sur ledit élément de fixation (32).

8. Ensemble selon la revendication 1, dans lequel ladite partie de tête de coupe (24) présente une surface latérale tronconique avec un plus petit diamètre du côté adjacent à ladite rainure (28) et un plus grand diamètre sur sa surface supérieure (26), un bord de coupe circulaire (52) étant formé à l'intersection de ladite surface supérieure (26) et de ladite surface latérale.

9. Ensemble selon la revendication 1, dans lequel ledit trou traversant (38) dudit élément de fixation (32) est allongé.

10. Ensemble selon la revendication 1, dans lequel ladite cavité (14) et ladite tige (16) du foret sont munies de cannelures complémentaires destinées à empêcher la rotation dudit foret (18) sur ledit porte-outil (10).
